# EUROPEAN PATENT APPLICATION

(11) **EP 4 822 161 A1**
(43) Date of publication of application: **14.10.2026**
(21) Application number: 26170687.3
(22) Date of filing: 02.04.2026
(51) Int. Cl.: F02C 7/36, F02C 7/06

(54) **GEAR REDUCTION WITH INTERMEDIATE GEAR COOLING HOLES**

(30) Priority: 02.04.2025 US 202519098574
(71) Applicant: RTX Corporation, Farmington, CT 06032 (US)
(72) Inventor: KLEIN, Mark A., Columbus, 43221 (US); McCUNE, Michael E., Colchester, 06415 (US)
(74) Representative: Dehns

(57) **Abstract**

A gas turbine includes a propulsor for delivering air as propulsion air, and for delivering air into a core engine. The core engine includes a compressor section, a combustor and a turbine section. A turbine rotor in the turbine section drives the propulsor, and a compressor rotor in the compressor section. There is an epicyclic gear reduction (48) between the turbine rotor and the propulsor. The epicyclic gear reduction (48) includes a sun gear (102) driven by the turbine rotor to engage and rotate intermediate gears (106). The intermediate gears (106) are mounted in a carrier. The intermediate gears (106) also engage a ring gear (100). At least one of the carrier and ring gear (100) drive the propulsor, and the intermediate gears (106) include a rim and gear teeth (109) extending outwardly of the rim. The intermediate gears (106) are mounted on journal bearings (108) which are supported in the carrier. The intermediate gear rims are provided with cooling passages extending with at least a component in a direction parallel to an axis of rotation of the intermediate gears (106).

## Description

### BACKGROUND OF THE INVENTION

This application relates to an intermediate gear and bearing journal pin combination for use in an epicyclic gear reduction for a gas turbine engine.

Gas turbine engines are known, and typically include a propulsor delivering air as propulsion air outwardly of a core engine. The propulsor also delivers air to the core engine, and to a compressor section. The air is compressed in the compressor section and delivered into a combustor where it is mixed with fuel and ignited. Products of this combustion pass downstream over turbine rotors, driving them to rotate.

Historically, the propulsor rotated at the same speed as a low pressure compressor from the compressor section and a low pressure turbine from the turbine section. However, Applicant developed a gas turbine engine wherein a gear reduction is positioned intermediate the propulsor and the low pressure compressor.

The gear reduction is an epicyclic gear reduction having intermediate gears mounted on journal pins. As can be appreciated, a good deal of torque is transmitted through the gear reduction to drive the propulsor application. It is desirable to maintain adequate lubrication between the journal pin and the intermediate gears.

### SUMMARY OF THE INVENTION

According to one aspect of the present invention, there is provided a gas turbine including a propulsor for delivering air as propulsion air, and for delivering air into a core engine. The core engine includes a compressor section, a combustor and a turbine section. A turbine rotor in the turbine section drives the propulsor, and a compressor rotor in the compressor section. There is an epicyclic gear reduction between the turbine rotor and the propulsor. The epicyclic gear reduction includes a sun gear driven by the turbine rotor to engage and rotate intermediate gears. The intermediate gears are mounted in a carrier. The intermediate gears also engage a ring gear. At least one of the carrier and ring gear drive the propulsor, and the intermediate gears include a rim and gear teeth extending outwardly of the rim. The intermediate gears are mounted on journal bearings which are supported in the carrier. The intermediate gear rims are provided with cooling passages extending with at least a component in a direction parallel to an axis of rotation of the intermediate gears.

Optionally, and in accordance with the above, the cooling passages receive cooling air.

Optionally, and in accordance with any of the above, the journal bearings have a lubricant passage to provide lubricant to an interface between an outer periphery of the journal bearings and an inner periphery of the intermediate gears, and the oil supply passage being at a first circumferential location.

Optionally, and in accordance with any of the above, a load force is applied against the intermediate gears, and the load force is at a second circumferential location spaced from the first circumferential location.

Optionally, and in accordance with any of the above, the journal bearing has a central oil supply passage which passes lubricant to at least one radially outwardly extending lubricant supply passage at the first location.

Optionally, and in accordance with any of the above, the cooling passages are generally circular in cross-section.

Optionally, and in accordance with any of the above, the cooling passages have a non-circular cross-section.

Optionally, and in accordance with any of the above, the cooling air passages have an elliptic cross-section.

Optionally, and in accordance with any of the above, the cooling passages have a plurality of distinct cross-sectional areas.

Optionally, and in accordance with any of the above, the cooling passages extend parallel to the axis of rotation.

Optionally, and in accordance with any of the above, the cooling passages extend with a component in a direction parallel to the rotational axis, but also with a component in a circumferential direction away from being parallel with the rotational axis.

Optionally, and in accordance with any of the above, the cooling passages have an enlarged scoop at an outer face of the intermediate gear.

Optionally, and in accordance with any of the above, the intermediate gears are double helical gears, and the cooling passages extending through two gear halves of the double helical gears, with the cooling passages extending with a component in the axial direction parallel to the axis of rotation in the intermediate gears but also with a component in a circumferential direction away from being parallel with the axis of rotation.

Optionally, and in accordance with any of the above, the cooling passages on the two gear halves of the double helical gear extend with opposed circumferential components.

Optionally, and in accordance with any of the above, the cooling passages receive a lubricant supply.

The present invention may include any one or more of the individual features disclosed above and/or below alone or in any combination thereof.

These and other features of the present invention can be best understood from the following specification and drawings, the following of which is a brief description.

### BRIEF DESCRIPTION OF THE DRAWINGS

Figure 1 schematically shows a gas turbine engine.
Figure 2 schematically shows a portion of an alternative engine.
Figure 3 shows an epicyclic gear reduction which may be incorporated into either the Figure 1 or Figure 2 embodiments.
Figure 4A shows a challenge that is addressed by this disclosure.
Figure 4B shows a journal bearing in a disclosed gear reduction.
Figure 5A shows an alternative embodiment to that shown in Figure 4A.
Figure 5B shows yet another alternative embodiment.
Figure 5C shows another alternative embodiment.
Figure 5D shows yet another alternative embodiment.
Figure 5E shows yet another alternative embodiment.
Figure 6A shows an intermediate gear which may benefit from this disclosure.
Figure 6B shows a first embodiment of the Figure 6A intermediate gear.
Figure 6C shows an alternative embodiment of the Figure 6A intermediate gear.
Figure 6D shows yet another alternative embodiment of the Figure 6A intermediate gear.
Figure 6E shows yet another alternative embodiment of the Figure 6A intermediate gear.
Figure 6F shows a cross-section through the Figure 6E embodiment.
Figure 7A shows yet another embodiment.
Figure 7B shows an embodiment of the Figure 7A arrangement.
Figure 7C shows another embodiment of the Figure 7A gear reduction.
Figure 7D shows yet another embodiment of the Figure 7A system.
Figure 7E is a cross-section through the Figure 7D embodiment.
Figure 8 shows a feature of all of the embodiments of this disclosure.

### DETAILED DESCRIPTION

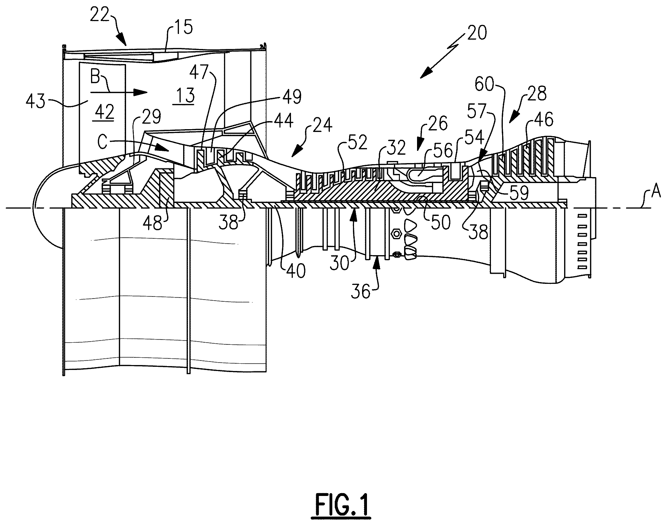

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The fan 42 may have at least 10 fan blades 43 but no more than 20 or 24 fan blades 43. In examples, the fan 42 may have between 12 and 18 fan blades 43, such as 14 fan blades 43. An exemplary fan size measurement is a maximum radius between the tips of the fan blades 43 and the engine central longitudinal axis A. The maximum radius of the fan blades 43 can be at least 40 inches, or more narrowly no more than 75 inches. For example, the maximum radius of the fan blades 43 can be between 45 inches and 60 inches, such as between 50 inches and 55 inches. Another exemplary fan size measurement is a hub radius, which is defined as distance between a hub of the fan 42 at a location of the leading edges of the fan blades 43 and the engine central longitudinal axis A. The fan blades 43 may establish a fan hub-to-tip ratio, which is defined as a ratio of the hub radius divided by the maximum radius of the fan 42. The fan hub-to-tip ratio can be less than or equal to 0.35, or more narrowly greater than or equal to 0.20, such as between 0.25 and 0.30. The combination of fan blade counts and fan hub-to-tip ratios disclosed herein can provide the engine 20 with a relatively compact fan arrangement.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. Example rotatable airfoils are schematically indicated at 47, and the vanes are schematically indicated at 49.

The low pressure compressor 44 and low pressure turbine 46 can include an equal number of stages. For example, the engine 20 can include a three-stage low pressure compressor 44, an eight-stage high pressure compressor 52, a two-stage high pressure turbine 54, and a three-stage low pressure turbine 46 to provide a total of sixteen stages. In other examples, the low pressure compressor 44 includes a different (e.g., greater) number of stages than the low pressure turbine 46. For example, the engine 20 can include a five-stage low pressure compressor 44, a nine-stage high pressure compressor 52, a two-stage high pressure turbine 54, and a four-stage low pressure turbine 46 to provide a total of twenty stages. In other embodiments, the engine 20 includes a four-stage low pressure compressor 44, a nine-stage high pressure compressor 52, a two-stage high pressure turbine 54, and a three-stage low pressure turbine 46 to provide a total of eighteen stages. It should be understood that the engine 20 can incorporate other compressor and turbine stage counts, including any combination of stages disclosed herein.

The engine 20 may be a high-bypass geared aircraft engine. It should be understood that the teachings disclosed herein may be utilized with various engine architectures, such as low-bypass turbofan engines, prop fan and/or open rotor engines, turboprops, turbojets, etc. The bypass ratio can be greater than or equal to 10.0 and less than or equal to about 18.0, or more narrowly can be less than or equal to 16.0. In open rotor engines the bypass ratio can extend up to 72.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 8.0 and in embodiments less than or equal to 4.0. In open rotor engines the gear reduction ratio can be much higher, and be greater than or equal to 8.0 and less than or equal to 18.0. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0. Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade 43 alone, without a Fan Exit Guide Vane ("FEGV") system. A distance is established in a radial direction between the inner and outer diameters of the bypass duct 13 at an axial position corresponding to a leading edge of the splitter 29 relative to the engine central longitudinal axis A. The fan pressure ratio is a spanwise average of the pressure ratios measured across the fan blade 43 alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]^{0.5}. The corrected fan tip speed can be less than or equal to 1150.0 ft / second (350.5 meters/second), and can be greater than or equal to 1000.0 ft / second (304.8 meters/second).

The fan 42, low pressure compressor 44 and high pressure compressor 52 can provide different amounts of compression of the incoming airflow that is delivered downstream to the turbine section 28 and cooperate to establish an overall pressure ratio (OPR). The OPR is a product of the fan pressure ratio across a root (i.e., 0% span) of the fan blade 43 alone, a pressure ratio across the low pressure compressor 44 and a pressure ratio across the high pressure compressor 52. The pressure ratio of the low pressure compressor 44 is measured as the pressure at the exit of the low pressure compressor 44 divided by the pressure at the inlet of the low pressure compressor 44. In examples, a sum of the pressure ratio of the low pressure compressor 44 and the fan pressure ratio is between 3.0 and 6.0, or more narrowly is between 4.0 and 5.5. The pressure ratio of the high pressure compressor ratio 52 is measured as the pressure at the exit of the high pressure compressor 52 divided by the pressure at the inlet of the high pressure compressor 52. In examples, the pressure ratio of the high pressure compressor 52 is between 9.0 and 12.0, or more narrowly is between 10.0 and 11.5. The OPR can be equal to or greater than 45.0, and can be less than or equal to 70.0, such as between 50.0 and 60.0. The overall and compressor pressure ratios disclosed herein are measured at the cruise condition described above, and can be utilized in two-spool architectures such as the engine 20 as well as three-spool engine architectures.

The engine 20 establishes a turbine entry temperature (TET). The TET is defined as a maximum temperature of combustion products communicated to an inlet of the turbine section 28 at a maximum takeoff (MTO) condition. The inlet is established at the leading edges of the axially forwardmost row of airfoils of the turbine section 28, and MTO is measured at maximum thrust of the engine 20 at static sea-level and 86 degrees Fahrenheit (°F) (30 degrees Celsius (°C). The TET may be greater than or equal to 2700.0 °F (1482.2 °C), or more narrowly less than or equal to 3500.0 °F (1926.7 °C), such as between 2750.0 °F (1510.0 °C) and 3350.0 °F (1843.3 °C). The relatively high TET can be utilized in combination with the other techniques disclosed herein to provide a compact turbine arrangement.

The engine 20 establishes an exhaust gas temperature (EGT). The EGT is defined as a maximum temperature of combustion products in the core flow path C communicated to at the trailing edges of the axially aftmost row of airfoils of the turbine section 28 at the MTO condition. The EGT may be less than or equal to 1000.0 °F (537.8 °C), or more narrowly greater than or equal to 800.0 °F (426.7 °C), such as between 900.0 °F (482.2 °C) and 975.0 °F (523.9 °C). The relatively low EGT can be utilized in combination with the other techniques disclosed herein to reduce fuel consumption.

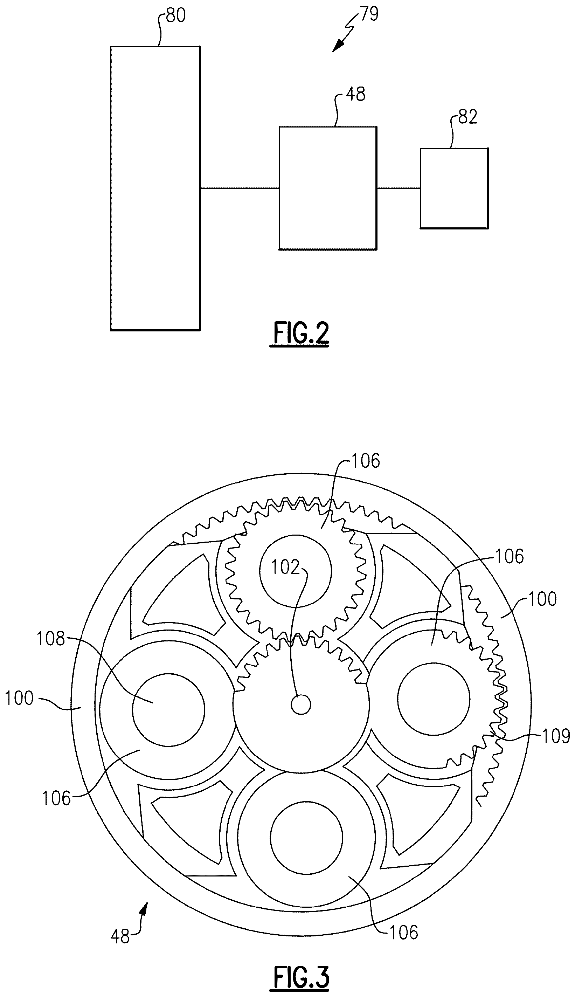

Figure 2 shows an alternative engine 79 having a propulsor 80 which may be an open rotor propulsor in place of the fan of the Figure 1. That is, there is no fan case outwardly of the propulsor 80 in embodiment 79. An epicyclic gear reduction 48 drives the propulsor 80 from drive input from a turbine rotor 82.

Figure 3 shows an example epicyclic gear reduction 48. A ring gear 100 is positioned outwardly of a sun gear 102. Drive input from the turbine section comes into the sun gear 102 which then drives intermediate gears 106. Intermediate gears 106 have an inner peripheral bore supported on journal bearing pins 108. The intermediate gears 106 have gear teeth 109 which are driven by the sun gear 102, and which engage teeth on the ring gear 100.

In a so called star gear system, a carrier structure that mounts the intermediate gears 106 is fixed against rotation. In a so called planet gear system, the ring gear is fixed against rotation and the carrier rotates. The disclosure of this application will benefit either type of gear reduction.

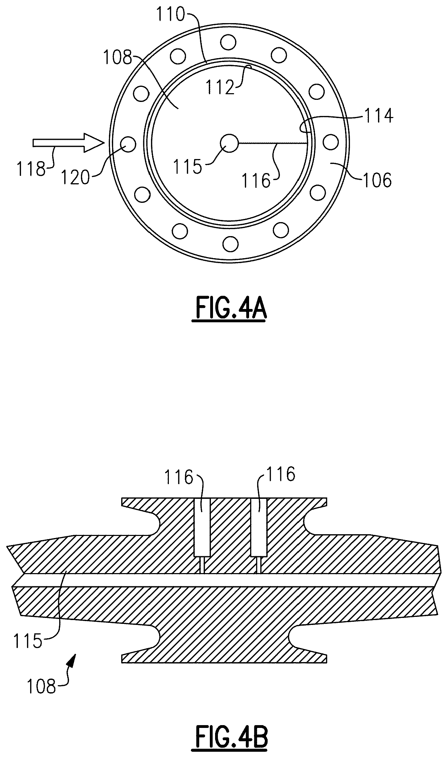

Figure 4A shows an intermediate gear 106 according to the disclosure of this application. As shown, the journal bearing pin 108 has a central oil supply passage 115 leading to radially outwardly extending passages 116. The passages 116 are at a first circumferential location. When the gear reduction drives the propulsor a load is applied against the intermediate gear 106 as shown at 118. This load is circumferentially spaced from the location of the passages 116. Thus, an oil film 110 found between an outer peripheral surface 112 of the journal bearing 108 and an inner peripheral surface 114 of the intermediate gear 106 may not be as thick as desired adjacent the load circumferential position 118.

Thus, this disclosure adds cooling holes 120 extending with at least a component in an axial direction along a rotational axis of the intermediate gear 106. This cools the intermediate gear 106, and allows the thickness of the film 110 to approach a more uniform level across 360 degrees of the interface between surfaces 112 and 114.

Figure 4B shows the journal bearing 108 having the central lubricant supply 115 communicating with radially outwardly extending passages 116.

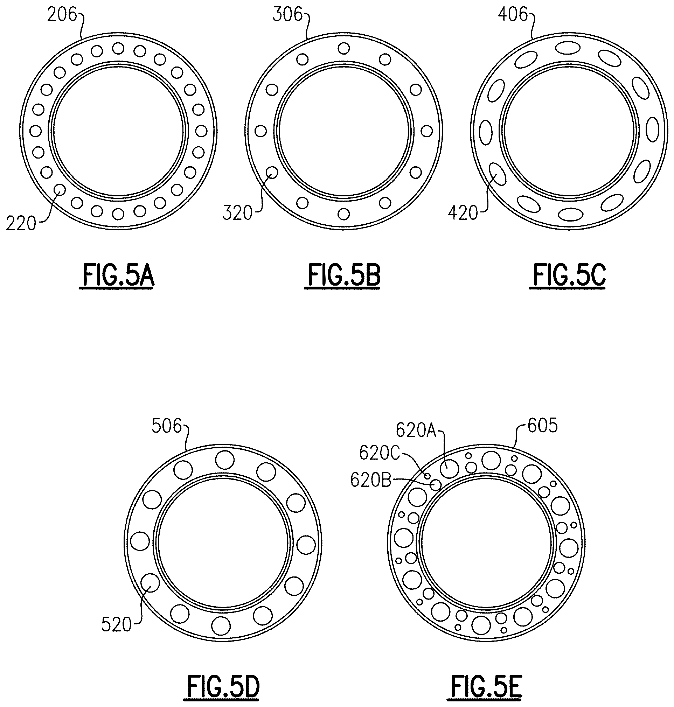

Figure 5A shows a variation of an intermediate gear 206 such that there are a greater number of cooling passages 220 with a smaller cross-sectional area than in the Figure 4A embodiment.

Figure 5B shows yet another embodiment 306 wherein there is a greater spacing between adjacent cooling air passages 320.

Figure 5C shows an intermediate gear embodiment 406, wherein the cooling air passages 420 have a non-cylindrical shape. In Figure 5C the cooling air passages 420 are elliptic. In other embodiments the passages could be square, triangular, or any other shape.

Figure 5D shows an intermediate gear embodiment 506 wherein the cooling air holes 520 are larger in cross-sectional area than in the earlier embodiments.

Figure 5E shows an intermediate gear embodiment 605 wherein the cooling air passages includes larger cooling air holes 620A and interspaced smaller cooling air passages 620B and 620C. Notably, the cooling air passages 620C are smaller than the cooling air passages 620B and positioned radially outwardly of them.

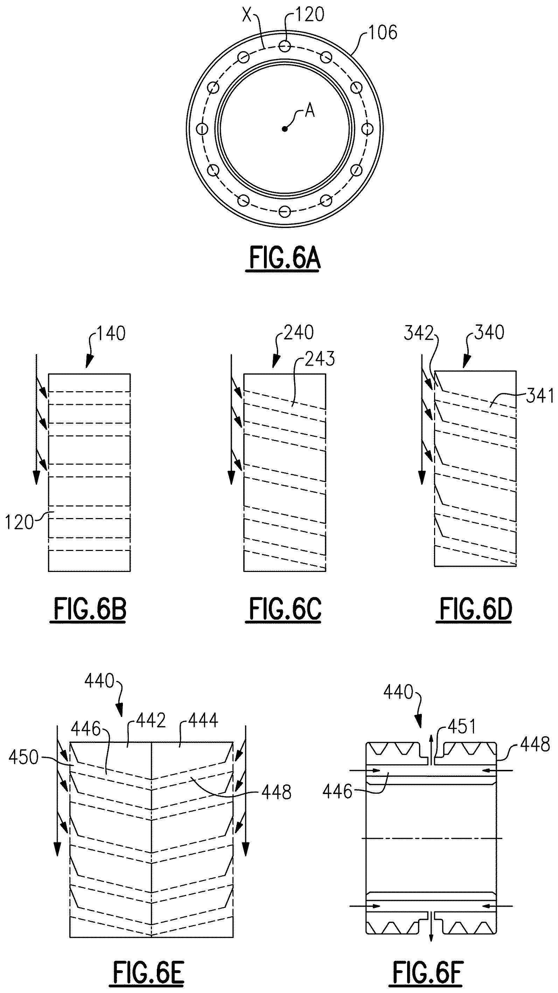

Figure 6A is a cross-sectional view of an intermediate gear 106 having cooling air passages 120. A dashed circle X is shown extending through the passages 120. Figures 6B-6F are along a portion of circle X.

As shown in Figure 6B, the cooling air passages 120 may be essentially parallel to a rotational axis A of the intermediate gear 106.

However, as shown in Figure 6C, the intermediate gear 240 could have the cooling air passages 243 extending with at least a component in an axial direction along the axis of rotation A, but also with a circumferential component extending away from being parallel to the axis A. The circumferential angle could be up to 10 degrees, but preferably 0 to 3 degrees. The selected angle will be dependent on geometry limitations, as well optimizing heat transfer and windage inefficiencies.

Figure 6D shows an intermediate gear embodiment 340 wherein the cooling air passages 341 extend with a component in the axial direction, and with a component in a circumferential direction away from being parallel to the axis A, but also with a scooped forward opening 342 to receive cooling air.

Figure 6E shows a dual or double helical intermediate gear 440. Here there are two gear portions 442 and 444. There are scoop inlets 450 leading into cooling air passages 446 and 448 which both extend with a component in an axial direction, but also with opposed components in a circumferential direction.

Figure 6F is a cross-section through the gear 440, and showing that the passages 446 and 448 extend towards each other, and then to an outlet passage 451 extending radially outwardly.

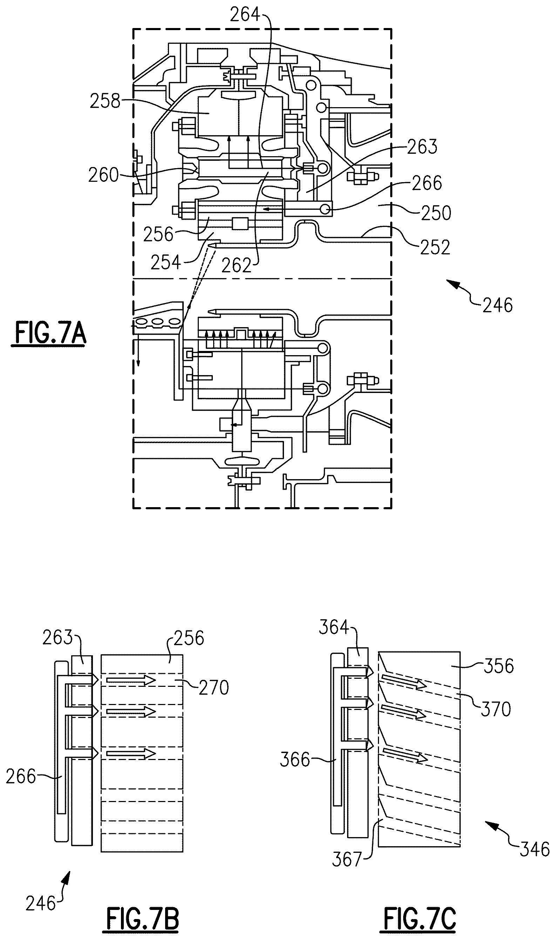

Figure 7A shows a gear reduction 246 which may be provided with oil cooling. Here an input 252 from the turbine section drives a sun gear 254. The sun gear 254 engages intermediate gears 256. A carrier 263 supports the intermediate gears, and journal bearings 260. The intermediate gears 256 engage the ring gear 258. The carrier is mounted at 263. There is an oil supply 264 to supply oil to the interface of the ring gear 258 and intermediate gears 256. There is also an oil supply 266 to supply oil to cooling air passages in the intermediate gears 256.

As shown in Figure 7B, the oil supply 266 supplies oil through the mount structure 263 and into cooling air passages in an intermediate gear 256. The oil passages 270 extend parallel to an axis of rotation of the gear 256.

Figure 7C shows an embodiment 346, wherein the oil supply 366 supplies oil to a mount 366 for an intermediate gear 364 having oil supply cooling passages 370 which extends with a component in a direction parallel to the rotational axis of the gear 356, but also with the component in a circumferential direction away from being parallel. Scoops inlet 367 are also included.

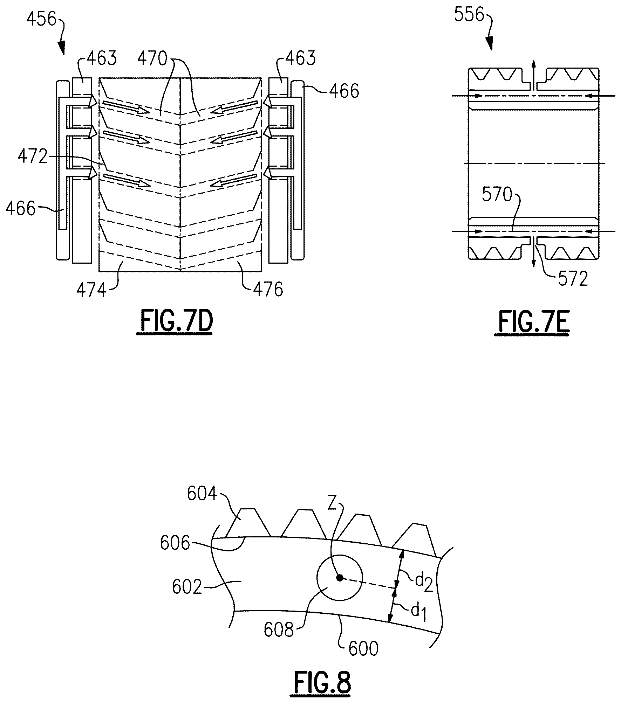

Figure 7D shows a double helical gear embodiment 456 having cooling oil passages 470. There are mount structures 463, and lubricant supply structure 466. As shown, there is a scoop inlet 472 leading into each of the oil supply passages 470. The oil supply passages 470 in the two gear portions 474 and 476 extend with circumferential direct components in opposed directions.

Figure 7E is a cross-section of Figure 7D but using 556 for the embodiment and 570 for the passages. The passages 570 extend to outlet holes 572.

Figure 8 shows a geometric relationship of the several air cooling and oil cooling passages of this disclosure. A gear 602 has an inner periphery 600, gear teeth 604, and an outer rim diameter 606. A cooling passage 608 is shown between the inner peripheral surface 600 and the outer peripheral surface 606. A ratio of a distance d₁ between a center Z of the cooling passage 608 and a distance d₂ from the center Z to the outer periphery 606 of the rim of the gear 602 is less than .5. In embodiments, at least a portion of the cooling hole 608 cross-sectional area is within 30 percent of a distance between the surfaces 600 and 606.

In addition, a ratio of the diameter to inner periphery 600 compared to the diameter of cooling hole 608 may be between 7:1 to 14:1. Further, a ratio of a diameter to the center line Z of the cooling hole 608 to the diameter to the inner periphery 600 may be between 1.14 and 1.34.

This disclosure will benefit gear reductions where the carrier drives the output, where the ring gear drives the output, and where both drive outputs.

While this disclosure has focused on cooling the interface between the gear and the journal pin, it should be understood that the cooling provided by this disclosure would also benefit the interface of the gear teeth between the intermediate gear and the ring gear.

While an embodiment has been disclosed, a worker of skill in this art would recognize that modifications would come within the scope of this disclosure. As one example, while the propulsor is disclosed as a fan it could also be an open rotor. For that reason, the following claims should be studied to determine the true scope and content of this disclosure.

## Claims

1. A gas turbine comprising:
a propulsor for delivering air as propulsion air, and for delivering air into a core engine, the core engine including a compressor section, a combustor and a turbine section;
a turbine rotor in the turbine section for driving the propulsor;
a compressor rotor in the compressor section; and
an epicyclic gear reduction between the turbine rotor and the propulsor, wherein the epicyclic gear reduction includes a sun gear driven by the turbine rotor to engage and rotate intermediate gears, the intermediate gears mounted in a carrier, the intermediate gears also engaging a ring gear, at least one of the carrier and ring gear driving the propulsor, and the intermediate gears include a rim and gear teeth extending outwardly of the rim, the intermediate gears being mounted on journal bearings which are supported in the carrier, and the intermediate gear rims being provided with cooling passages extending with at least a component in a direction parallel to an axis of rotation of the intermediate gears.

2. The gas turbine engine of claim 1, wherein the cooling passages receive cooling air.

3. The gas turbine engine of claim 1 or 2, wherein the journal bearings have a lubricant passage to provide lubricant to an interface between an outer periphery of the journal bearings and an inner periphery of the intermediate gears, and the oil supply passage being at a first circumferential location.

4. The gas turbine engine of claim 3, configured such that a load force is applied against the intermediate gears, and the load force is at a second circumferential location spaced from the first circumferential location.

5. The gas turbine engine of claim 3 or 4, wherein the journal bearing has a central oil supply passage which passes lubricant to at least one radially outwardly extending lubricant supply passage at the first circumferential location.

6. The gas turbine engine of any preceding claim, wherein said cooling passages are generally circular in cross-section.

7. The gas turbine engine of any of claims 1 to 5, wherein the cooling passages have a non-circular cross-section.

8. The gas turbine engine of any of claims 1 to 5 or 7, wherein the cooling passages have an elliptic cross-section.

9. The gas turbine engine of any preceding claim, wherein the cooling passages have a plurality of distinct cross-sectional areas.

10. The gas turbine engine of any preceding claim, wherein the cooling passages extend parallel to the axis of rotation.

11. The gas turbine engine of any of claims 1 to 9, wherein the cooling passages extend with a component in a direction parallel to the rotational axis, but also with a component in a circumferential direction away from being parallel with the rotational axis.

12. The gas turbine engine of any of claims 1 to 9, wherein the intermediate gears are double helical gears, and the cooling passages extend through two gear halves of the double helical gears, with the cooling passages extending with a component in the axial direction parallel to the axis of rotation in the intermediate gears but also with a component in a circumferential direction away from being parallel with the axis of rotation.

13. The gas turbine engine of claim 12, wherein the cooling passages on the two gear halves of the double helical gear extend with opposed circumferential components.

14. The gas turbine engine of any preceding claim, wherein the cooling passages have an enlarged scoop at an outer face of the intermediate gear.

15. The gas turbine engine of any preceding claim, wherein the cooling passages receive a lubricant supply.
